# EUROPÄISCHE PATENTANMELDUNG

(11) **EP 0 670 389 A1**
(43) Veröffentlichungstag der Anmeldung: **06.09.1995**
(21) Anmeldenummer: 95100460.5
(22) Anmeldetag: 14.01.1995
(51) Int. Cl.: E02D 17/20

(54) **Verbundmatte, insbesondere für den Fels-, Böschungs- und Deponiebau**

(30) Priorität: 15.01.1994 DE 9400650 U
(71) Anmelder: Radtke, Johannes, 47447 Moers (DE)
(72) Erfinder: Radtke, Johannes, 47447 Moers (DE)

(57) **Zusammenfassung**

Verbundmatten, insbesondere für den Fels-, Böschungs- und Deponiebau, bestehen im wesentlichen aus nach Art von Kett- und Schußfäden miteinander verwebten, eine Gittermatte (1) bildenden Streifen, aus beispielsweise Chemie- oder Naturfasern, und weisen mindestens eine mit der Gittermatte (1) verbundene Beschichtung (4) auf. Zur Sicherung von Böschungen und zum Schutz gegen Erosionen sowie zur Bildung einer flächendeckenden Verbundmatte weisen die Gittermatten (1), mindestens teilweise Verstärkungen (6) auf, und die Randbereiche (8) der Gittermatte (1) und/oder der Beschichtung (4) sind als Verbindungselemente ausgebildet.

## Beschreibung

Die Erfindung betrifft eine Verbundmatte, insbesondere für den Fels-, Böschungs- und Deponiebau, die im wesentlichen aus nach Art von Kett- und Schußfäden miteinander verwebten, eine Gittermatte bildenden Streifen, aus beispielsweise Chemie- oder Naturfasern, und mindestens einer mit der Gittermatte verbindbaren Beschichtung besteht.

In vielen Baubereichen, wie beispielsweise Fels-, Böschungs- und Deponiebau sowie im Straßen- und Grundbau, aber auch bei Ufer- und Dünenbefestigungen, ergeben sich ständig Probleme dahingehend, daß beispielsweise, bedingt durch Natureinflüsse, wie Regen, Wind und Temperaturen insbesondere oberflächennahe unerwünschte Erdbewegungen und Erosionen auftreten.

So läßt sich beispielsweise im Böschungs- und Felsbau ohne zusätzliche Maßnahmen kaum ein natürlicher, auf keinen Fall eine über den normalen Böschungswinkel hinausgehende steilere Böschung herstellen, da sich in diesen Fällen oberflächennahe Erdbewegungen nicht vermeiden lassen. Solche Erscheinungen lassen sich ständig, insbesondere an beispielsweise neuen Autobahnen angelegten Böschungen, durch große Risse in der Böschung dokumentieren. Hierfür müssen Maßnahmen ergriffen werden, die einerseits Bewegungen z. B. durch Regeneinfluß verhindern, andererseits aber den natürlichen oder künstlichen Böschungsbewuchs nicht beeinträchtigen, sondern vielmehr unterstützen.

Vergleichbare Probleme treten im Grund- oder auch Deponiebau auf, wo allerdings nicht nur Erdbewegungen verhindert oder ausgeglichen werden müssen, sondern wo zusätzliche Abdichtungsprobleme auch gegen Strahlungen und Dränageschwierigkeiten zu überwinden sind. So müssen Abdichtungen geschaffen werden, die in der Lage sein sollen, bei auftretenden Erdbewegungen entsprechende Zugkräfte aufzunehmen. Im anderen Falle müssen ebenfalls Zugkräfte aufgenommen werden können, jedoch werden gleichzeitig eine gezielte Entwässerung, sowie das Festhalten von eventuellen Schadstoffen gefordert.

Der Erfindung liegt nunmehr die Aufgabe zugrunde, zur Lösung vieler in den angesprochenen Bereichen auftretender Schwierigkeiten eine Matte in Form einer Verbundmatte zu schaffen, die auf einfache Weise den jeweiligen örtlichen Verhältnissen angepaßt werden kann, die in gezielter Form auftretende Kräfte aufnehmen kann, die ohne Probleme jeder Flächengröße anpaßbar ist, und die mit mindestens einer den Bedürfnissen entsprechenden Beschichtung versehbar ist.

Die Lösung für ein solches Prinzip ist darin zu sehen, daß die Gittermatte mindestens teilweise Verstärkungen aufweist, und die Randbereiche der Gittermatte und/oder der Beschichtung als Verbindungselemente ausgebildet sind.

Eine derartige, den anstehenden Bedürfnissen oder Forderungen entsprechende Verbundmatte ist vom Gewicht her sehr leicht und in beliebiger Größe faltbar oder in Rollen transportierbar.

Ein Teil der Verbundmatte, die Gittermatte, besteht aus hochfesten, vornehmlich Hochleistungstextilien, wobei die Längs- und Querstreifen beliebig verstärkbar sind und den Erfordernissen anpaßbar ausgebildet sind. Die jeweilige Maschengröße ist frei wählbar. Die Beschichtung, die beispielsweise auf die Gittermatte aufkaschierbar ist und aus einem Geotextil bestehen kann, bildet mit der Gittermatte einen Verbund, der ein gewünschtes Dehnverhalten, eine entsprechende Tragfähigkeit oder auch Filtereigenschaften sowie die Abstimmung z. B. auf gewisse Chemikalien aufweist. Darüber hinaus ist die Verbundmatte Temperatur- und UV-beständig sowie antistatisch, alkalibeständig und schwer entflammbar ausgebildet. Insbesondere ist es im Bergbau für die Aufnahme von bestimmten Stoffen bzw. für das Deponieren von Abfallstoffen erforderlich, die Beschichtungen, vor allem Vliese, antistatisch auszubilden. Dies kann beispielsweise mit metallischen Fasern oder durch Vernadeln mit antistatischen Textilfasern, beispielsweise Kohlenstoffasern oder in der Wirkung vergleichbaren Materialien, durchgeführt werden. Bei der Herstellung, beispielsweise einer aus zwei Vliesbahnen bestehenden Beschichtung, enthält z. B. die obere Vliesbahn einen gewissen Anteil antistatischer Fasern. Beim Kaschieren beider Vliesbahnen durch Vernadeln werden antistatische Fasern in die untere Bahn eingenadelt, wodurch insgesamt nicht nur ein guter Oberflächenwiderstand, sondern gleichzeitig auch ein guter Durchgangswiderstand erreicht wird. Gegenüber der bisherigen Imprägnierung geht der Oberflächen- und Durchgangswiderstand nunmehr durch Auswaschungen oder Austrocknungen nicht mehr verloren.

Die Verstärkungen der Verbundmatte können in der Gittermatte, aber auch in der Beschichtung integriert sein. Neben Verstärkungen in Form von verstärkten Längs- und Querstreifen kann beispielsweise mindestens eine diagonale Verstärkung vorhanden sein. Andernfalls können die verwendeten Chemie- und/oder Naturfasern, wie Polyamid, Aramid, Polyester, Polypropylen oder ähnliche Fasern, beispielsweise durch Glasfasern und vergleichbare Stoffe, wie metallische Einlagen, verstärkt werden.

Anstelle der verstärkten Ausbildung durch eine Versteifung kann die Gittermatte auch eine gewisse Nachgiebigkeit oder Dehnvermögen enthalten.

Für eine optimale Abdichtung, beispielsweise im Rahmen von Deponien, oder auch im Bergbau, sollte das Hochleistungstextilgittergewebe, d. h. die Gittermatte mit einer in der Stärke den Anforderungen angepaßten Beschichtung in Form einer bei Bedarf antistatisch und schwer entflammbar ausgebildeten PVC-Folie kaschiert werden, wobei eine besonders vorteilhafte Ausbildung zur Abdichtung großer Flächen in einer besonderen Gestaltung der Randbereiche der Folie liegt, der beispielsweise allseits die Gittermatte überragt und mit den benachbarten Verbundmatten verklebt oder verschweißt werden kann.

Für bestimmte Anwendungsfälle der Verbundmatte ohne Nachgiebigkeit und Dehnvermögen kann das Gittergewebe in extrudiertem Material hergestellt sein und ebenfalls mit einem beispielsweise Geotextil kaschiert werden. Bei Wahl der Beschichtung in Form eines Geotextils kann dieses vornehmlich aus Chemiefasern, wie Polypropylen-, Polyätylen- oder Polyamidfasern gebildet sein. Die Stärke und die Durchlässigkeit der Beschichtung eines ein- oder mehrlagigen Geotextils ist nach den Anforderungen ebenso wie die Form der Durchlässigkeit bei der Filtration zu wählen, wobei zusätzlich jederzeit Perforationen in beliebiger Zahl einzubringen sind. Die großmaschige Gittermatte kann auch durch eine kleinmaschige Gittermatte beschichtet sein, was beispielsweise einen Vorteil bei der Begrünung von Böschungen darstellt. Darüber hinaus ist es möglich, die Verbundmatten farblich auf den jeweiligen Untergrund der Böschungen, Ufer usw. abzustimmen. Für derartige Verwendungszwecke kann die Gittermatte aus verrottbaren Naturfasern bestehen, wobei auch die Verbindungen nicht verschiebefest ausgebildet sein müssen.

Für die Herstellung großer, durch die Verbundmatte abzudeckender Flächen und die damit unter Umständen verbundene Übertragung von Zugkräften ist es vorteilhaft, wenn die Verbundmatten zur Verbindung untereinander im Randbereich Verstärkungen aufweisen.

Die Verstärkungen können so ausgebildet sein, daß ein oder mehrere Streifen des Randbereichs verstärkt ausgebildet sind, wobei die einzelnen Randbereiche der zu verbindenden Verbundmatten überlappen und durch die überlappenden Maschen Bänder, Kordeln oder Streifen gezogen oder geflochten werden.

Es erweist sich im Rahmen der Erfindung als besonders vorteilhaft, daß die Verbundmatte unter Berücksichtigung einer gewissen Durchlässigkeit, d. h. Filterwirkung mit Geotextilien verbindbar ist, die als gekräuselte unterschiedliche Längen der Fasern aufweisende technische Vliese, wie Spinnvliese oder Filze, ausgebildet sind.

Die erfindungsgemäße Verbundmatte gewährleistet eine gute Bewehrung, auch im Straßenbau, sowie beispielsweise auch beim Bau von Rollfeldern. Die Einstellung der Verbundmatte kann das ungewünschte Durchdringen von Bitumen oder Beton in den Untergrund verhindern. Die Verbundmatte ist durch die Ausbildung in der Kombination so zu gestalten, daß sie eine optimale Tragfähigkeit und Reißfestigkeit aufweist. Neben der Ausbildung einer zweilagigen Verbundmatte kann diese bei Bedarf mehrlagig ausgebildet sein, was im einzelnen die Gittermatte als auch die Beschichtung betreffen kann. Die Beschichtung der Gittermatte kann aus einer kurzen oder langen Faser bestehen, die durch Beflockung gebildet wird, und die vornehmlich beim Böschungsbau, oder zur Dünenbildung und -sicherung zu verwenden ist, und die den aufgetragenen Mutterboden bzw. Dünensand gegen Regen und Wind festhält.Die Beschichtung in Form von Beflockungen oder aufkaschierten Geotextilen kann kurzflorig oder langflorig oder derart gekräuselt ausgebildet sein, daß beispielsweise in die gekräuselte Ausbildung der Beschichtung für den Böschungsbau der Grassamen integrierbar ist. Andererseits kann die Beschichtung der Gittermatte aus zwei durch Vernadeln oder Kaschieren miteinander verbundenen, leicht perforierten bzw. offenen Vliesen bestehen, in welche beispielsweise der Grassamen eingestreut wird, der dann nach dem Einbauen der Verbundmatte an Böschungen, Ufern usw. durch Niederschlag oder künstliche Bewässerung dem natürlichen Boden zugeführt wird, ohne durch andere Einflüsse ausgewaschen zu werden. Für derartige Zwecke kann die vornehmlich kleinmaschige Gittermatte als Beschichtung mit kurzlebigen, im Rohzustand pastösen Gemischen eingestrichen werden, in welche der Grassamen integriert ist. Als pastöse Beschichtungsstoffe eignen sich Sägemehl oder z. B. recycelbare Stoffe, wie u. a. zerkleinertes Papier, das angefeuchtet und evtl. gepreßt den Grassamen enthält. Zusätzlich kann die Papier-Folie oder Schicht perforiert ausgebildet sein.

Alternativ können beliebige wasserspeichernde Stoffe verwendet werden, die den Grassamen unverlierbar aufnehmen und nach dem Verlegen das Angehen des Grases gewährleisten.

Die Verbundmatte kann auch in verschiedenen Formen und Zusammensetzungen der Beschichtung zum Schutz gegen Tierbaue, beispielsweise gegen Wildkaninchen, eingesetzt werden.

Vornehmlich im Böschungs- und Felsbau erweist es sich als zweckmäßig, als zusätzliche Maßnahme Anker, beispielsweise Injektionsanker einzusetzen, die in Verbindung mit den Verbundmatten eine ideale Ergänzung darstellen. Zu diesem Zweck eignen sich Verbundmatten, in denen beispielsweise die Gittermatte mit verstärkten Streifen in Längs- und Querrichtung versehen ist. Die Kreuzungsstellen der verstärkten Streifen bilden in idealer Weise die Stellen, auf denen die Ankerplatten anzubringen sind.

Die ein- oder mehrlagig beschichtete Verbundmatte kann insbesondere für den Einsatz im Deponiebau zur Abschirmung oder Abdichtung gegen Strahlung eine metallisierte Beschichtung aus z. B. Aluminium, Kupfer, Blei, Silber oder ähnlichem enthalten.

In den Zeichnungen sind verschiedene Ausführungsbeispiele der Erfindung dargestellt, die im folgenden näher erläutert werden.

Es zeigen:
- Figur 1: ein Ausführungsbeispiel einer Verbundmatte, deren zu verbindender Randbereiche mit Verstärkungen versehen sind, und
- Figur 2: eine teilweise Darstellung zweier miteinander verbundener Verbundmatten,
- Figur 3: ein weiteres Ausführungsbeispiel einer Verbundmatte mit zu verbindenden Randbereichen und
- Figur 4: ein Ausführungsbeispiel einer Verbundmatte in Verbindung mit Ankerplatten.

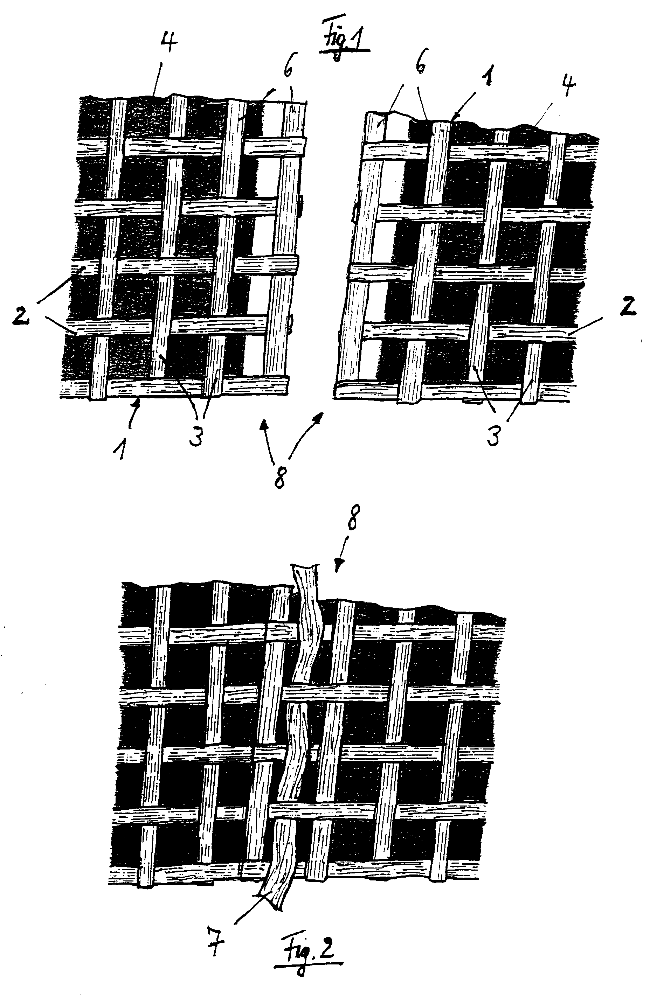

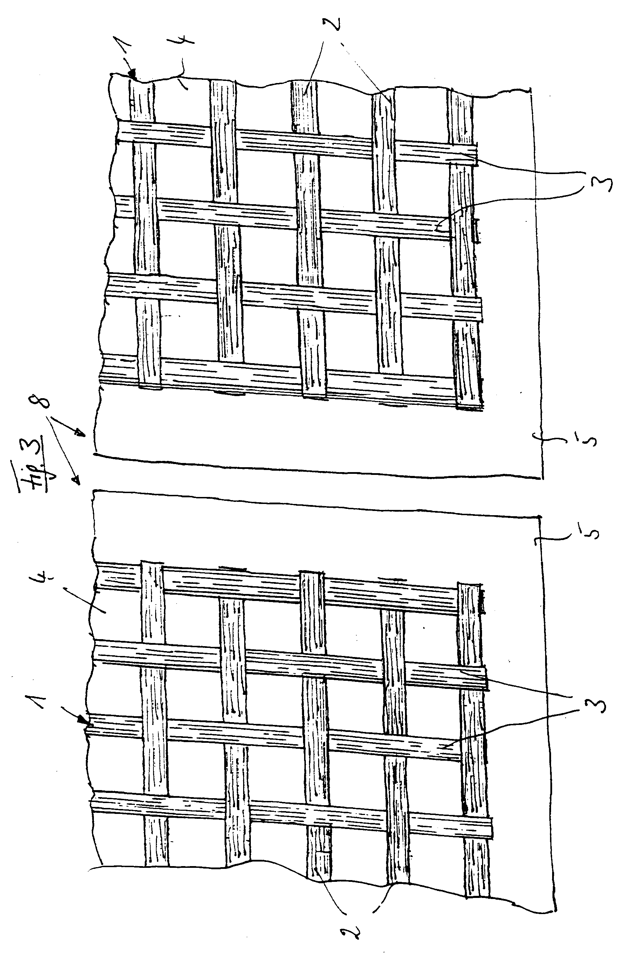

Das in Figur 1 dargestellte Ausführungsbeispiel einer Verbundmatte besteht aus einer Gittermatte 1, die aus eine beliebige Maschengröße bildenden Längsstreifen 2 und Querstreifen 3 besteht und die beispielsweise durch Aufkaschieren mit einer Beschichtung 4 verbunden ist. Die aus einem beliebigen Material bestehende Beschichtung 4, beispielsweise Vlies, ist durch einen dunklen Untergrund gekennzeichnet. Die Darstellung in Figur 1 zeigt zwei teilweise wiedergegebene Verbundmatten, die besondere Verstärkungen aufweisende Randbereiche 8 zeigen. Die Randbereiche 8 sind nur teilweise mit einer Beschichtung 4 oder einer teilweise überlappenden Beschichtung 4 versehen und weisen, wie das Ausführungsbeispiel wiedergibt, im Randbereich 8 verstärkte Streifen 6 auf. Die Verbindung der Verbundmatten, wie sie in Figur 1 dargestellt sind, geschieht durch gegenseitige Überlappung, wobei, wie aus Figur 2 zu entnehmen ist, zur zugfesten und dichten Verbindung dieser Verbundmatten durch die Überlappung im Randbereich 8 ein zugfestes Band, Kordel oder Streifen 7 einziehbar ist.

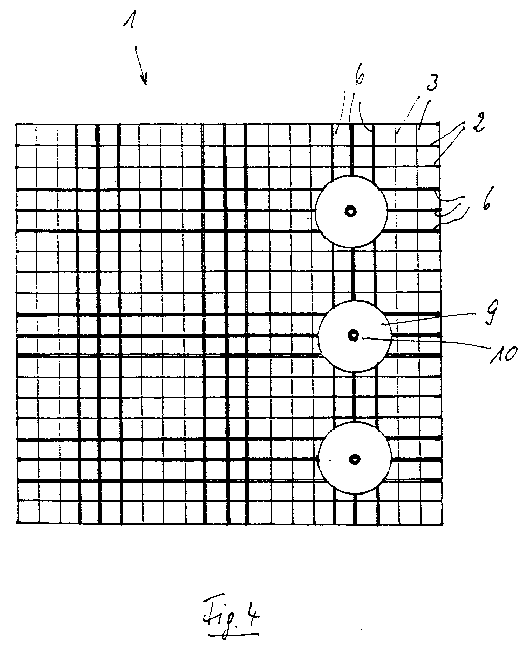

In Figur 3 ist ein Ausführungsbeispiel einer Verbundmatte wiedergegeben, bei dem die Gittermatte 1, wiederum aus Längsstreifen 2 und Querstreifen 3 bestehend, mit einer Beschichtung, beispielsweise in Form einer undurchlässigen PVC-Folie verbunden ist. Zur Verbindung einzelner Verbundmatten zur Bildung einer großflächigen Matte bildet die PVC-Beschichtung 4 allseits einen überstehenden Rand 5, der in überlappender Form miteinander verschweißt oder verklebbar ist. Die Verbindung der Verbundmatten untereinander ist unabhängig von der Ausführung der Beschichtung 4 in beliebiger Form wählbar. Dabei ist jeweils zu berücksichtigen, ob eine entsprechende Festigkeit oder ein entsprechendes Dehnverhalten zu übertragen ist.

In Figur 4 ist ein weiteres Ausführungsbeispiel einer Verbundmatte dargestellt, bei welcher in die Gittermatte 1 verstärkt ausgebildete Quer- und Längsstreifen 6 in regelmäßigen Abständen eingewebt sind. Die Kreuzungsstellen der Längs- und Querstreifen 6 in verstärkter Ausbildung bilden die für die Festigkeit und Haltbarkeit der Verbundmatte günstigsten Stellen zur Positionierung der durch Anker 10 gehaltenen und nur beispielhaft angedeuteten Ankerplatten 9, wobei die Verstärkungen 6 ein Zerstören der Verbundmatte verhindern.

### Bezugszeichenliste

- 1: Gittermatte
- 2: Längsstreifen
- 3: Querstreifen
- 4: Beschichtung
- 5: Rand
- 6: verstärkte Streifen
- 7: Band
- 8: Randbereich
- 9: Ankerplatten
- 10: Anker

## Patentansprüche

1. Verbundmatte, insbesondere für den Fels-, Böschungs- und Deponiebau, die im wesentlichen aus nach Art von Kett- und Schußfäden miteinander verwebten, eine Gittermatte bildenden Streifen, aus beispielsweise Chemie- oder Naturfasern, und mindestens einer mit der Gittermatte verbindbaren Beschichtung besteht, **dadurch gekennzeichnet**, daß die Gittermatten (1) mindestens teilweise Verstärkungen (6) aufweisen, und die Randbereiche (8) der Gittermatte (1) und/oder der Beschichtung (4) als Verbindungselemente ausgebildet sind.

2. Verbundmatte nach Anspruch 1, **dadurch gekennzeichnet**, daß zur Erhöhung der Tragfähigkeit die Streifen (2, 3) der Gittermatte (1) mindestens in einer Richtung durch Einbindung von beispielsweise Glasfasern, Filamenten oder metallischen Einlagen verstärkt ausgebildet sind.

3. Verbundmatte nach Anspruch 1, **dadurch gekennzeichnet**, daß die Gittermatte (1) als großmaschiges Gewebe zur Erhöhung der Tragfähigkeit zusätzlich mit einem kleinmaschigen Gittergewebe verbindbar ist.

4. Verbundmatte nach Anspruch 3, **dadurch gekennzeichnet**, daß das kleinmaschige Gittergewebe in das großmaschige Gittergewebe (1) integriert, beispielsweise eingewebt angeordnet ist.

5. Verbundmatte nach den Ansprüchen 1 - 3, **dadurch gekennzeichnet**, daß die zusätzliche Verstärkung der Gittermatte (1) in integrierter und/oder aufgebrachter Form aus mindestens in einer Richtung angeordneten Diagonalstreifen besteht.

6. Verbundmatte nach einem der vorangehenden Ansprüche, **dadurch gekennzeichent**, daß die beispielsweise durch Kaschieren mit der Gittermatte (1) verbundene Beschichtung (4) als PVC-Folie ausgebildet ist, und die Streifen (2, 3) der Gittermatte (1) der Nachgiebigkeit der Folie angepaßt ausgebildet sind.

7. Verbundmatte nach Anspruch 1, **dadurch gekennzeichnet**, daß die Beschichtung (4) als auf die Gittermatte (1) aufkaschiertes Geotextil ausgebildet ist, wobei die Durchlässigkeit des Geotextils gezielt, beispielsweie durch Auswahl des Vlieses, einstellbar ist.

8. Verbundmatte nach Anspruch 1, **dadurch gekennzeichnet**, daß die Gittermatte (1) durch beispielsweise Aufkaschieren oder Vernadeln verschiedener Geotextillagen mehrlagig beschichtbar ausgebildet ist.

9. Verbundmatte nach Anspruch 1, **dadurch gekennzeichnet**, daß die Beschichtung (4) der Gittermatte (1) aus einer Beflockung, beispielsweise aus Kurzfasern, besteht.

10. Verbundmatte nach Anspruch 1, **dadurch gekennzeichnet**, daß die Beschichtung (4) in ein- oder mehrlagiger Form, beispielsweise durch Vernadeln mit antistatischen Fasern, antistatisch ausgebildet ist.

11. Verbundmatte nach den Ansprüchen 6 und 7, **dadurch gekennzeichnet**, daß die Beschichtungen (4) in der Durchlässigkeit durch Perforationen einstellbar sind.

12. Verbundmatte nach Anspruch 1, **dadurch gekennzeichnet**, daß die Beschichtung durchlässig und in einer kräuseligen Form, beispielsweise zur Integration von Grassamen, ausgebildet ist.

13. Verbundmatte nach Anspruch 1, **dadurch gekennzeichnet**, daß die Gittermatte (1) einen beispielsweise allseits über die Beschichtung (4) überstehenden Randbereich (8) aufweist, der mit mindestens einem verstärkten, zur Überlappung vorgesehenen Streifen (6) versehen ist, und daß zur Verbindung von Gittermatten (1) untereinander in die Maschen der überlappenden Randbereiche (8) Bänder, Gurte, Streifen oder Kordeln (7) einflechtbar sind.

14. Verbundmatte nach Anspruch 1, **dadurch gekennzeichnet**, daß die Beschichtung (4) im Randbereich (8) nicht fest mit der Gittermatte (1) verbunden und bei Verbindung von Gittermatten (1) untereinander zur gegenseitigen Überlappung ausgebildet ist.

15. Verbundmatte nach Anspruch 1, **dadurch gekennzeichnet**, daß die aus PVC-Folie bestehende Beschichtung (4) einen für die Überlappung und Verbindung mit der benachbarten Beschichtung (4) ausgebildeten und über die Gittermatte (1) überstehenden Rand (5) aufweist.

16. Verbundmatte nach Anspruch 1, **dadurch gekennzeichnet**, daß die Gittermatte (1) unabhängig von der Art und Ausbildung der Beschichtung (4), beispielsweise zur Aufnahme von Ankerplatten (9), in regelmäßigen Abständen in Längs- und Querrichtung verstärkte, miteinander verwebte Streifen (6) aufweist.

17. Verbundmatte nach Anspruch 1, **dadurch gekennzeichnet**, daß die Beschichtung (4) der Gittermatte (1) aus einem beim Auftragen pastösen Gemisch aus verrottbarem Material, wie z. B. Sägemehl, recyceltem, zerkleinertem Papier oder einem anderen wasserspeichernden Stoff besteht, in welcher der Grassamen integiert ist.
